# EUROPÄISCHE PATENTANMELDUNG

(11) **EP 0 790 318 A1**
(43) Veröffentlichungstag der Anmeldung: **20.08.1997**
(21) Anmeldenummer: 96110540.0
(22) Anmeldetag: 28.06.1996
(51) Int. Cl.: C13D 1/04, B01D 11/02

(54) **Vorrichtung zum kontinuierlichen Auslaugen von faserigem Gut, insbesondere von Zuckerrohr und/oder Bagasse**

(71) Anmelder: Braunschweigische Maschinenbauanstalt AG, 38122 Braunschweig (DE)
(72) Erfinder: Grünewald, Werner, 38300 Wolfenbüttel (DE)
(74) Vertreter: Einsel, Martin, Dipl.-Phys.

(57) **Zusammenfassung**

Eine Vorrichtung zum kontinuierlichen Auslaugen (Fest-Flüssig-Extraktion) von faserigem Gut, insbesondere von Zuckerrohr und/oder Bagasse, weist einen Diffuseur auf, in dem das Gut kontinuierlich transportiert wird. Ferner sind Flüssigkeitsaufgabeeinrichtungen vorgesehen, mit denen Imbibitionsflüssigkeit auf das Gut im Diffuseur gegeben wird. Durch einen Siebboden verläßt die Imbibitionsflüssigkeit das Gut nach Durchlauf und wird Flüssigkeitssammelgefäßen unterhalb des Siebbodens gesammelt. Fördereinrichtungen führen den Inhalt eines Flüssigkeitssammelgefäßes einer zugeordneten Flüssigkeitsaufgabeeinrichtung zu, wobei die Zuordnung nach dem Gegenstromprinzip zur Gutförderrichtung erfolgt. Jede Flüssigkeitsaufgabeeinrichtung ist so ausgebildet, daß sie beregnungsartig einen Flächenbereich auf der Oberfläche des Gutes gleichzeitig mit Imbibitionsflüssigkeit versieht, der mindestens der Hälfte des Perkolationsbereiches eines Flüssigkeitssammelgefäßes entspricht.

## Beschreibung

Die Erfindung betrifft eine Vorrichtung und ein Verfahren zum kontinuierlichen Auslaugen von faserigem Gut, insbesondere von Zuckerrohr und/oder Bagasse.

Aus der DE-PS 15 67 245, der ZA-PS 875 667 und der EP 0 255 555 B1 sind solche Vorrichtungen für die Fest-Flüssig-Extraktion bekannt. Das Extraktionsgut, in erster Linie kommt hierfür gehäckseltes Zuckerrohr oder Zuckerrohr-Bagasse (das ist die bereits vorextrahierte Form von Zuckerrohr) in Betracht, wird dabei relativ langsam transportiert. Am ausgangsseitigen Ende wird diesem Extraktionsgut heißes Wasser als lmbibitionsflüssigkeit zugeführt. Diese Imbibitionsflüssigkeit durchläuft (perkoliert) das Extraktionsgut von oben nach unten, nimmt dabei weitere vorhandene Zuckerbestandteile mit und verläßt das Extraktionsgut unten durch ein Sieb.

Dieses Sieb kann entweder feststehend sein oder sich auch mit dem Extraktionsgut mitbewegen, je nach Art des Diffuseurs bzw. der Transportvorrichtung. Unterhalb des Siebbodens befindet sich ein Flüssigkeitssammelgefäß. In dieses strömt die mit den geringen Zuckeranteilen versehene Imbibitionsflüssigkeit. Es wird von dort mittels Pumpen und Rohrleitungen wieder in den Bereich oberhalb des zu extrahierenden Gutes geführt und dort in der nächsten etwas weiter förderrichtungsaufwärts gelegenen Flüssigkeitsaufgabeeinrichtung auf das hier noch nicht ganz so weit ausgelaugte Gut abgegeben. Es durchläuft dieses erneut, dieser Schritt wird mehrfach wiederholt.

Dadurch entsteht insgesamt eine Auslaugung im Gegenstromprinzip; am Beginn der Förderstrecke des Extraktionsgutes, an dem dieses also praktisch noch nicht ausgelaugt ist, wird schon weitgehend mit Zucker versehene Imbibitionsflüssigkeit aufgegeben und schließlich unten im letzten Flüssigkeitssammelgefäß mit maximalem Zuckeranteil aufgefangen.

Diese Diffuseure haben bisher Breiten bis zu 12 m und Längen von 40 bis 65 m. Die Verarbeitungsleistungen können bei Zuckerrohrdiffuseuren bis zu 450 t/h, bei Bagasse-Diffuseuren sogar bis zu 650 t/h betragen. Die Schichthöhen des Extraktionsgutes, also von Zuckerrohr oder Bagasse in den Diffuseuren variieren zwischen 1,0 und 1,8 m, und die Anzahl der Saftperkolationen, also der Stufen der erneuten Flüssigkeitszufuhr von oben beträgt zwischen 6 und 15.

Die Flüssigkeitsaufgabeeinrichtungen geben in konsequenter Verfolgung des Gegenstromprinzips die lmbibitionsflüssigkeit von oben jeweils konstant einer bestimmten Stelle in jeweils einer Stufe - verteilt über die Breite des Diffuseurs, also etwa vorhangartig - ab, so daß im Laufe der Zeit. bedingt durch die Transportbewegung des Gutes bzw. Materials, jeder Oberflächenbereich der Zuckerrohr-/Bagasse-Oberfläche mit Flüssigkeit beaufschlagt wird.

Gleichwohl ist die Extraktionsausbeute nicht optimal. Bestimmte Bereiche, vor allem in den oberen Schichten der Zuckerrohr-/Bagasse-Schicht, werden nicht so stark mit lmbibitionsflüssigkeit benetzt, wie dies gewünscht wäre, was zu einer geringeren als der optimalen Zuckerextraktion führt.

Erhöht man die Standard-lmbibitionsmenge, also die betriebsübliche Menge an zugeführter Flüssigkeit, so kann man zwar zu einer höheren Benetzung kommen, im Extremfall zu einer Überflutung des Bagasse-Betts. Dies hat jedoch den Nachteil, daß die lmbibitionsflüssigkeit zur Rezirkulation und/oder auch zu Bypass neigt, also die gewünschte Perkolationsstufe verläßt und damit in andere als die optimalen Flüssigkeitssammelgefäße gelangt. Damit wird das Gegenstromprinzip empfindlich gestört und es kommt zu deutlichen Effektivitätsminderungen. Dies liegt daran, daß in bestimmte Flüssigkeitssammelgefäße dann verschiedene Imbibitionsflüssigkeiten mit unterschiedlicher Zuckerkonzentration gelangen, was dann zu entsprechend ineffektiver Extraktion im nächsten Schritt führt. Außerdem "überspringen" (bypass) dann einzelne Flüssigkeitströpfchen eine Perkolationsstufe, was zu geringerer Extraktion führt, andere dagegen durchlaufen bei Rezirkulation Stufen doppelt, was wegen des im Verhältnis schon zu hohen Zuckergehaltes nicht sinnvoll ist.

Schließlich führt eine höhere lmbibitionsmenge auch zu dünnen Zuckersäften und zu voluminös mehr Flüssigkeit nach einer Auslaugung, somit zu einer höheren Wasserverdampfung und damit zu höheren Kosten durch die größere Verdampferfläche und den höheren Dampfverbrauch.

Aufgabe der Erfindung ist demgegenüber, eine gattungsgemäße Vorrichtung vorzuschlagen, bei der eine verbesserte Auslaugung erfolgen kann.

Diese Aufgabe wird gelöst durch eine gattungsgemäße Vorrichtung, bei der jede Flüssigkeitsaufgabeeinrichtung so ausgebildet ist, daß sie beregnungsartig einen Flächenbereich auf der Oberfläche des Gutes gleichzeitig mit lmbibitionsflüssigkeit versieht, der mehr als die Hälfte des Perkolationsbereiches eines Flüssigkeitssammelgefäßes entspricht.

Bei dem jetzt vorgeschlagenen neuen Verfahren wird diese Aufgabe dadurch gelöst, daß zusätzlich zu den bekannten Verfahrensmaßnahmen die Imbibitionsflüssigkeit gleichzeitig auf einen Flächenbereich auf der Oberfläche des Gutes gegeben wird, der mehr als der Hälfte des Perkolationsbereiches eines einzelnen Flüssigkeitssammelgefäßes entspricht.

In erfindungsgemäßen Vorrichtungen und Verfahren könnte jetzt statt von Flüssigkeitsaufgabevorrichtungen von Beregnungseinrichtungen gesprochen werden.

Durch die Erfindung wird es möglich, nicht nur in zeitlicher Abfolge die gesamte Schichtoberfläche des Extraktionsgutes zu benetzen, sondern gleichzeitig in einem bestimmten Perkolationsbereich die gesamte oder wesentliche Teile der Oberfläche. Dies ist wesentlich effizienter, da eine 100%-ige Beregnung und hohe Benetzung der Zuckerrohr- bzw. Bagassepartikel erfolgen kann, ohne eine Überflutung und Rezirkulation und/oder Bypass-Bildung des Extraktionsgutes herbeizuführen.

Die Diffuseur-Größe wird damit optimal genutzt, und die Anlage muß nicht größer dimensioniert werden als dies bisher der Fall ist. Die Zeitdauer der Benetzung des Zuckerrohr-/ Bagasse-Gemisches wird wesentlich besser genutzt und die Ausbeute verbessert. Während bisher nur zwischen 20 und 30 % der Zuckerrohr-/Bagasse-Oberfläche gleichzeitig mit Flüssigkeit beaufschlagt wird, ist es jetzt bis zu 100 %, und auch die Benetzung im Inneren der Zuckerrohr-/Bagasse-Schicht im Verhältnis zur lmbibitionsmenge wird verbessert.

Die Saftverteilung erfolgt hierbei über Verteilerrohre. Die Verteilerrohre sind mit den einzelnen Saftverteilvorrichtungen (Beregnungseinrichtungen) versehen, so daß die lmbibitionsflüssigkeit regenartig und gleichmäßig dem bewegten Zuckerrohr-/Bagasse-Bett großflächig zugegeben wird, natürlich entsprechend dem jeweiligen Perkolationsgebiet.

Physikalische Grundlage des erfindungsgemäßen Effektes ist folgender, bisher im Stand der Technik noch nicht berücksichtigter Umstand: Wird das Wasser durch eine Beregnungseinrichtung von oben auf das Gut aufgegeben, so würde es bei nichtbewegtem Gut an sich naturgemäß senkrecht durch das Gut nach unten durch den Siebboden strömen. Aufgrund der Bewegung des Gutes und der endlichen Geschwindigkeit, mit der die lmbibitionsflüssigkeit durch das Gut strömt, bildet sich ein bestimmter Flüssigkeitswinkel relativ zur Vertikalen aus, mit dem ein bestimmter Tropfen lmbibitionsflüssigkeit durch das Gut unter Auslaugung desselben strömt. Dieser Winkel ist von diversen Randumständen (Beförderungsgeschwindigkeit des Gutes, Widerstand, der dem Tropfen lmbibitionsflüssigkeit durch mehr oder weniger große Partikel des Gutes entgegengesetzt wird usw.) bestimmt.

Bei den bisherigen Verfahren wird nun nicht ein einzelner Tropfen, sondern eine gewisse Flüssigkeitsmenge aufgegeben, diese verteilt sich und bildet einen Bereich aus, der über das Gut nach unten gesehen breiter wird, d.h. bestimmte Tröpfchen der lmbibitionsflüssigkeit laufen langsamer als andere durch das Gut und werden dadurch über eine längere Strecke in Förderrichtung des Gutes mitgenommen. Der Grund für diese längere Förderrichtung liegt in der gegenseitigen Verdrängung und damit dem erhöhten Widerstand, der weiteren zusätzlichen Imbibitionsflüssigkeitsmengen jeweils entgegensteht. Wird also eine weitere Flüssigkeitsmenge aufgegeben, verbreitert sich der Winkel jeweils zusätzlich, so daß die Perkolationsfläche oberhalb der Flüssigkeitssammelgefäße um so größer ist, je größer die Flüssigkeitsmenge an einem Punkt des Aufgabebereichs ist.

Erfindungsgemäß wird nun aber im Gegensatz zum Stand der Technik eine gleichzeitige, bevorzugt auch eine gleichmäßige Beregnung über den im wesentlichen gesamten oberen Flächenbereich vorgenommen. An jedem einzelnen Flächenelement der Oberfläche des Gutes wird daher nur eine relativ geringe Flüssigkeitsmenge - verglichen vor allem mit der relativ konzentrierten Imbibitionsflüssigkeitsmengenaufgabe nach dem Stand der Technik im Vorhangbereich - zu einem bestimmten Zeitpunkt auftreffen. Dieser Verdrängungseffekt findet daher nicht statt, und alle Flüssigkeitströpfchen laufen mehr oder weniger unbehindert und dadurch mit dem gleichen Winkel (bedingt wiederum durch die Fördergeschwindigkeit des Gutes) durch die Zuckerrohr- bzw. Bagassepartikel.

Von diesem physikalisch-technischen Effekt macht die Erfindung Gebrauch. Er führt dazu, daß der Flächenbereich auf der Oberfläche des Gutes, auf den die lmbibitionsflüssigkeit aufgegeben wird, praktisch identisch so groß ist wie der Perkolationsbereich in Siebbodennähe des Diffuseurs, also derjenige Flächenbereich, aus dem ein Flüssigkeitssammelgefäß jeweils gespeist wird. Es gibt also keinen Bereich in der Gutschicht im Diffuseur im Extraktionsbereich mehr, der ineffektiv zu einem bestimmten Zeitpunkt gesehen nicht zur Auslaugung genutzt wird. Stattdessen wird das gesamte Gut im Diffuseur gleichzeitig beregnet, und zwar zu jedem Zeitpunkt, und das gesamte Diffuseurbett dient gleichzeitig mit seinem gesamten Inhalt ebenfalls zu jedem betrachteten Zeitpunkt zum Auslaugen des darin befindlichen Gutes. Ausgenommen sind natürlich die äußeren Randbereiche bei der Gutaufgabe und beim Abfördem, also außerhalb des für die Extraktion genutzten Bereichs.

Dadurch wird eine erhebliche Effektivitätsverbesserung eines bestimmten Diffuseurs erzielt. Es kann also bei einem bestimmten Anwendungszweck entweder die Ausbeute des Zuckerrohrs bzw. der Bagasse im Diffuseur erhöht werden, oder aber die Baumaße des Diffuseurs können bei gleichem Zuckergewinnungsergebnis verkleinert werden, ggf. kann die Bearbeitungsgeschwindigkeit oder die Schichtdicke des zu bearbeitenden Gutes erhöht werden, da die Auslaugung entsprechend schneller stattfindet und somit die Verarbeitungsleistung des Diffuseurs erhöht werden.

Es erfolgt eine bis zu 100%-ige Beregnung in der Breite und Länge des Bagasse-Bettes und damit eine effiziente Zuckerextraktion.

Mit der erfindungsgemäßen Vorrichtung ist neben der kontinuierlichen Auslaugung von Zuckerrohr und/oder Bagasse sowie von Hirse auch die Überarbeitung ähnlicher Rohstoffe, beispielsweise die Gewinnung von Öl aus ölhaltigen faserigen Pflanzen oder aber auch die Auslaugung von Zuckerrüben möglich. In solchen Fällen wird man dazu neigen, den Siebboden mitzubewegen und den Abtransport des Gutes anders vorzunehmen als bei Zuckerrohr, das mittels Ketten oder anderer Mitnahmeeinrichtungen in Gutflußrichtung gefördert wird. Auf den eingangs geschilderten Stand der Technik sei insoweit hingewiesen.

Im folgenden werden anhand der Zeichnung einige Ausführungsbeispiele der Erfindung im einzelnen beschrieben. Es zeigen:
- Figur 1: eine schematische Darstellung des Standes der Technik;
- Figur 2: eine schematische Darstellung des geänderten Ablaufes gemäß der Erfindung;
- Figur 3: einen Schnitt senkrecht zu Figur 2 entlang der Linie III-III.

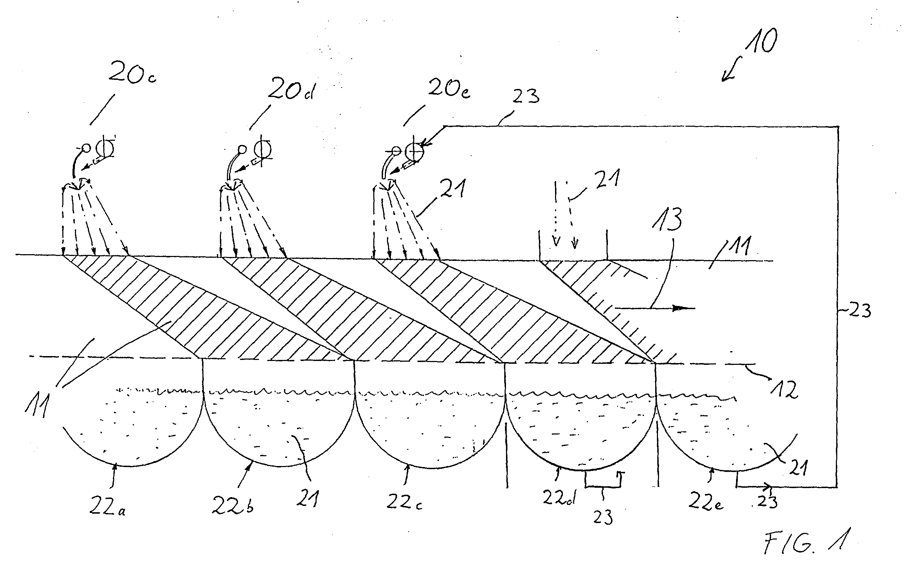

**Figur 1** zeigt schematisch die Arbeitsweise in einem Stand der Technik. Dargestellt ist ein Schnitt längs einer Vorrichtung mit einem Diffuseur 10, in welchem sich Gut 11 befindet, das auf einem Siebboden 12 bewegt wird, und zwar in Pfeilrichtung 13. Das Gut 11 ist faserig, beispielsweise aufbereitetes Zuckerrohr oder Zuckerrohr-Bagasse, und wird in der Fig. 1 von links kommend in nicht dargestellter Weise in den Diffuseur 10 eingegeben. Der Siebboden 12 steht ortsfest, ebenfalls nicht dargestellte Mitnahmevorrichtungen sorgen für den Transport in die Pfeilrichtung 13.

Das Gut 11 soll kontinuierlich ausgelaugt und in ihm enthaltene Stoffe, insbesondere natürlich Zucker, gewonnen werden. Dies geschieht, indem auf das Gut 11 von oben über Flüssigkeitsaufgabeeinrichtungen 20 lmbibitionsflüssigkeit 21 aufgegeben wird. Die lmbibitionsflüssigkeit 21 ist zunächst beispielsweise heißes Wasser und wird dem in Pfeilrichtung 13 am weitesten geförderten Abschnitt des Gutes 11 im Diffuseur 10 aufgegeben. Diese lmbibitionsflüssigkeit 21 läuft dann durch das Gut 11 in das ebenfalls am weitesten rechts liegende Flüssigkeitssammelgefäß 22e. Zu diesem Zeitpunkt hat sie bereits etwas Zucker aus dem Gut 11 herausgelaugt. Der Zuckergehalt ist hier allerdings noch sehr klein, zumal die Auslaugung aus einem Gutbestandteil 11 erfolgt ist, das bereits zuvor weitgehend seines Zuckergehaltes beraubt wurde. Aus dem am weitesten rechts liegenden Flüssigkeitssammelgefäß 22 bzw. der am weitesten rechts liegenden Saftwanne 22e wird über eine nur schematisch angedeutete Fördereinrichtung 23 der Flüssigkeitsinhalt der in Pfeilrichtung 13 am nächsten gutstromäufwärts liegenden Flüssigkeitsaufgabeeinrichtung 20e zugeführt.

Aus dieser Flüssigkeitsaufgabeeinrichtung 20e wird wiederum die nun schon leicht zuckerhaltige lmbibitionsflüssigkeit 21 von oben auf die Oberseite des Gutes 11 im Diffuseur 10 gegeben, durchströmt diese Gutschicht wiederum unter gleichzeitiger Auslaugung des nun noch etwas zuckerhaltigeren Gutes 11 und gelangt in die zweite Saftwanne 22d. Dieser Vorgang wiederholt sich immer weiter gutstromaufwärts. In der Figur ist durch den angehängten Buchstaben an das Bezugszeichen 20 veranschaulicht, aus welchem Flüssigkeitssammelgefäß ihr Imbibitionsflüssigkeit zugeführt wird.

Die Flüssigkeitsaufgabeeinrichtungen 20 geben dabei die lmbibitionsflüssigkeit 21 mehr oder weniger senkrecht in vorhangartiger Form auf die Oberfläche des unter ihnen liegenden Bereich des Gutes ab, so daß also praktisch linienförmig oder streifenförmig, nämlich in einer Linie bzw. einem Streifen quer über den Diffuseur 10 hinweg, das darunter hindurchlaufende Gut 11 entsprechend von oben benetzt wird. Aufgrund des kontinuierlichen Transports in Pfeilrichtung 13 wird so jeder Flächenbereich des Gutes von oben zu mehreren Zeitpunkten in bestimmten Abständen mit Flüssigkeit versehen, die dann nach unten abströmt. Pro Flüssigkeitssammelgefäß 22 ist eine Flüssigkeitsaufgabeeinrichtung 20 vorzusehen, und es ist sehr intensiv darauf zu achten, daß die von einer bestimmten Flüssigkeitsaufgabeeinrichtung 20 ausgehende Imbibitionsflüssigkeit 21 auf keinen Fall in ein ihr nicht zugeordnetes Flüssigkeitssammelgefäß 22 gelangt, da es dort zu einer die Effektivität der gesamten Verfahrensführung störenden Verfälschung und Beeinträchtigung des Gegenstromprinzips führt.

Würden zu wenig Zucker enthaltende Imbibitionsflüssigkeitsanteile durch Bypassbildung in einen bereits benachbarten, gutstromaufwärts liegenden Teilbereich gelangen, so würden sie den Zuckergehalt am Ende des Gesamtprozesses senken und auch das Gut selbst würde nicht optimal ausgelaugt. Gelangen zu viele Zuckerbestandteile gutstromabwärts, so werden letztendlich Teile der lmbibitionsflüssigkeit mit Zuckeranteilen ganz aus dem Diffuseur 10 heraustransportiert und entsprechendes Gut bzw. enthaltener Zucker geht ganz verloren. Die Flüssigkeitsmengen in den jeweiligen Flüssigkeitssammelgefäßen würden nicht mehr konstant sein und den Aufgabemengen entsprechen und so zu kaum vorhersehbarem Verhalten des Verfahrens, zu zu geringer Zuckerextraktion führen.

In der **Figur 1** ist also als zugeordnetes Flüssigkeitssammelgefäß jeweils das mit dem nächstniedrigeren Buchstaben anzusehen; der Flüssigkeitsaufgabeeinrichtung 20c ist das Flüssigkeitssammelgefäß 22b zugeordnet und so fort.

Bei einer Betrachtung des Querschnitts der bekannten Anlage fällt auf, daß zwar das gesamte Gut 11 zu bestimmten Zeitpunkten benetzt und mit Imbibitionsflüssigkeit versehen ist, daß es jedoch bestimmte, recht erhebliche Winkelbereiche gibt, die zu einem bestimmten betrachteten Zeitpunkt nicht von Imbibitionsflüssigkeit durchtränkt sind, in denen also eine geringe Auslaugung stattfindet. Diese Volumenbereiche sind besonders breit benachbart zur Oberfläche zwischen den Flüssigkeitsaufgabeeinrichtungen 20 und laufen in Richtung des Siebbodens 12 spitz zu.

Diese Bereiche des Bagassebettes im Diffuseur sind nicht optimal ausgenutzt.

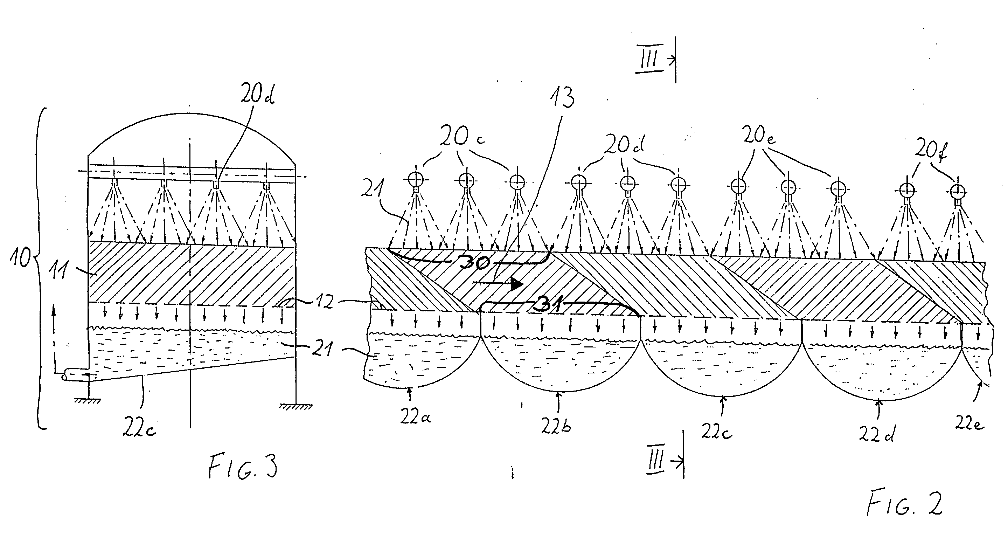

Die **Figur 2** zeigt die erfindungsgemäße Vermeidung dieses ungünstigen, erkannten Effekts.

Grundsätzlich ist die Funktionsweise und auch die Darstellung der Anlage in Fig. 2 ähnlich der in Fig. 1: Wiederum wird in einem Diffuseur 10 Gut 11 auf einem Siebboden 12 in Pfeilrichtung 13 transportiert. Flüssigkeitsaufgabeeinrichtungen 20 versorgen die Oberfläche des Gutes 11 im Diffuseur 10 mit lmbibitionsflüssigkeit 21, die durch das Gut 11 zum Siebboden 12, durch diesen hindurch in Flüssigkeitssammelgefäße 22 strömt.

Auch hier sind Fördereinrichtungen 23 vorgesehen, die den Inhalt eines Flüssigkeitssammelgefäßes 22 der jeweils gutstromaufwärts liegenden Flüssigkeitsaufgabeeinrichtung 20 zuführen.

Es wird jedoch nicht wie bei einem Vorhang in Fig. 1 nur ein bestimmter senkrecht zur Pfeilrichtung 13, also zur Gutförderrichtung liegender Streifen auf der Oberfläche des Gutes 11 zu einem bestimmten Zeitpunkt mit Imbibitionsflüssigkeit 21 versehen, sondern zu jedem beliebigen Zeitpunkt die im wesentlichen gesamte Oberfläche des Gutes 11.

Aus den Flüssigkeitsaufgabeeinrichtungen 20 sind jetzt regelrechte Beregnungseinrichtungen geworden.

Da sämtliche betrachteten Tropfen der lmbibitionsflüssigkeit ungehindert voneinander mit dem gleichen Widerstand und mit mehr oder weniger gleicher Strömungsgeschwindigkeit durch das geförderte Gut 11 wandern, ist in dem zu einem bestimmten Zeitpunkt genommenen Querschnitt der Fig. 2 auch der zu erkennende Winkel, mit dem ein Flüssigkeitstropfen hindurchläuft, jeweils praktisch konstant. Das bedeutet, daß die in einem bestimmten Flächenbereich 30 auf der Oberfläche des Gutes 11 auftreffenden Imbibitionsflüssigkeitsanteile auch in einem praktisch genauso großen und zugeordneten Perkolationsbereich 31 mit den ausgelaugten Bestandteilen des Gutes 11 auf dem Siebboden 12 anlangen, durch diesen hindurchströmen und so in die zugeordneten Flüssigkeitssammelbehälter 22 strömen.

Die aus der Fig. 1 zu erkennenden, winkelförmigen Volumenraumbereiche innerhalb des Diffuseurs 10, die zu einem bestimmten betrachteten Zeitpunkt jeweils nicht der Auslaugung zugute kommen, fallen so praktisch weg.

Um die Bypassbildung und Rezirkulation von lmbibitionsflüssigkeit weiter zu verringern bzw. auszuschließen, können, falls erforderlich oder gewünscht, relativ kleine Randbereiche zwischen je zwei benachbarten Flächenbereichen 30 auf der Oberfläche des Gutes 11 von Beregnung freigehalten werden. Diese Randbereiche sind jedoch kleiner als die Hälfte der gesamten Oberfläche, bevorzugt kleiner als ein Drittel und besonders bevorzugt auch kleiner als ein Zehntel der Oberfläche. Die leicht verringerte Ausnutzung der Kapazität des Diffuseurs wird dabei zugunsten der Vermeidung von Bypassbildung und Rezirkulation in Kauf genommen.

Möglich ist es auch, etwa zur Berücksichtigung der unterschiedlichen Zusammensetzung des Gutes mit entsprechend verändertem Strömungswiderstand (aufgrund großer/kleiner Häckselung, Fremdstoffanteilen in der Regenzeit bei Zuckerrohrernten etc.) entsprechend eine Verlagerung der zugeordneten Flächenbereiche vorzunehmen, etwa durch unterschiedliche Verteilung der Flüssigkeitsmengen auf die einzelnen Verteilerrohre.

Die **Figur 3** zeigt zur Verdeutlichung auch einen Schnitt senkrecht zu Fig. 2, aus dem insbesondere zu erkennen ist, daß die Förderung der lmbibitionsflüssigkeit aus dem Flüssigkeitssammelbehälter 22 zur jeweils nächstgelegenen Flüssigkeitsaufgabeeinrichtung 20 gutstromaufwärts neben der Förderung des Gutes 11 im Diffuseur 10 erfolgen kann.

Für die Verteilung der Flüssigkeit und die Beregnung sind verschiedene Konzeptionen mit entsprechenden Verteilerrohren möglich. Mit geeigneten Saftverteilvorrichtungen kann für eine möglichst gleichmäßige Beregnung gesorgt werden.

Die Figuren 2 und 3 deuten gemeinsam an, daß hier etwa beispielsweise die Flüssigkeitsaufgabeeinrichtung 20d aus einem Feld aus 3 x 4, insgesamt also 12, Abgabestellen besteht, die die lmbibitionsflüssigkeit aus dem benachbarten Flüssigkeitssammelbehälter 22d abgeben, wozu sie geeignet miteinander verbunden sind.

## Patentansprüche

1. Vorrichtung zum kontinuierlichen Auslaugen von faserigem Gut (11), insbesondere von Zuckerrohr und/oder Bagasse
mit einem Diffuseur (10), in dem das Gut (11) kontinuierlich transportiert wird,
mit Flüssigkeitsaufgabeeinrichtungen (20), mit denen Imbibitionsflüssigkeit (21) auf das Gut (11) im Diffuseur (10) gegeben wird,
mit einem Siebboden (12), durch den die lmbibitionsflüssigkeit (21) das Gut (11) nach Durchlauf verläßt,
mit Flüssigkeitssammelgefäßen (22), die unterhalb des Siebbodens (12) die lmbibitionsflüssigkeit (21) eines zugeordneten Perkolationsbereiches (31) des Diffuseurs (10) sammeln,
mit Fördereinrichtungen (23), die den Inhalt eines Flüssigkeitssammelgefäßes (22) einer zugeordneten Flüssigkeitsaufgabeeinrichtung (20) zuführen, wobei die Zuordnung nach dem Gegenstromprinzip zur Gutförderrichtung erfolgt,
**dadurch gekennzeichnet,**
**daß** jede Flüssigkeitsaufgabeeinrichtung (20) so ausgebildet ist, daß sie beregnungsartig einen Flächenbereich (30) auf der Oberfläche des Gutes (11) gleichzeitig mit lmbibitionsflüssigkeit (21) versieht, der mindestens der Hälfte des Perkolationsbereiches (31) eines Flüssigkeitssammelgefäßes (22) entspricht.

2. Vorrichtung nach Anspruch 1,
**dadurch gekennzeichnet,**
**daß** der Flächenbereich (30) mindestens zwei Dritteln, bevorzugt neun Zehnteln oder mehr des Perkolationsbereiches (31) eines Flüssigkeitssammelgefäßes (22) entspricht.

3. Vorrichtung nach Anspruch 1 oder 2,
**dadurch gekennzeichnet,**
**daß** der Flächenbereich (30) gleichzeitig und gleichmäßig beregnungsartig mit der lmbibitionsflüssigkeit (21) versehen wird.

4. Vorrichtung nach einem der vorstehenden Ansprüche,
**dadurch gekennzeichnet,**
**daß** die Verteilerrohre die lmbibitionsflüssigkeit (21) den Flüssigkeitsaufgabeeinrichtungen (20) zuführen.

5. Vorrichtung nach einem der vorstehenden Ansprüche,
**dadurch gekennzeichnet,**
**daß** die Zufuhr der lmbibitionsflüssigkeit (21) auf die Oberfläche des Gutes (11) steuerbar ist.

6. Vorrichtung nach Anspruch 5,
**dadurch gekennzeichnet,**
**daß** pro einzelnen Perkolationsbereich eine anteilmäßige Flüssigkeitsmenge je Flüssigkeitsverteilerrohr variierbar ist.

7. Verfahren zum kontinuierlichen Auslaugen von faserigem Gut (11), insbesondere von Zuckerrohr und/oder Bagasse, bei dem das Gut (11) kontinuierlich transportiert wird, von oben mit lmbibitionsflüssigkeit (21) beregnet wird, nach unten die lmbibitionsflüssigkeit wieder in ein Flüssigkeitssammelgefäß (22) abgibt, wobei die lmbibitionsflüssigkeit (21) gesammelt wird und im Gegenstromprinzip mittels Fördereinrichtungen (23) wieder von oben auf das Gut (11) gegeben wird,
**dadurch gekennzeichnet,**
**daß** die Imbibitionsflüssigkeit (21) gleichzeitig auf einen Flächenbereich gegeben wird, der mindestens der Hälfte des Perkolationsbereiches eines Flüssigkeitssammelgefäßes (22) entspricht.

8. Verfahren nach Anspruch 7,
**dadurch gekennzeichnet,**
**daß** der Flächenbereich (30) mindestens zwei Dritteln, insbesondere neun Zehnteln oder mehr des Perkolationsbereiches (31) eines Flüssigkeitssammelgefäßes (22) entspricht.

9. Verfahren nach Anspruch 7 oder 8,
**dadurch gekennzeichnet,**
**daß** die lmbibitionsflüssigkeit (21) gleichzeitig und gleichmäßig beregnungsartig auf den Flächenbereich (30) aufgegeben wird.
